# EUROPEAN PATENT APPLICATION

(11) **EP 4 843 848 A1**
(43) Date of publication of application: **25.11.2026**
(21) Application number: 25178275.1
(22) Date of filing: 22.05.2025
(51) Int. Cl.: B60T 17/00

(54) **AN AIR-DRYING DEVICE, AN ASSOCIATED AIR PRESSURE SYSTEM AND AN ASSOCIATED VEHICLE**

(71) Applicant: VOLVO TRUCK CORPORATION, 405 08 Göteborg (SE)
(72) Inventor: HERMANN, Olivier, 69440 ST MAURICE SUR DARGOIRE (FR)
(74) Representative: Lavoix

(57) **Abstract**

The invention concerns an air-drying device (14) for a vehicle comprising:
- a cylindrical housing (24) extending along a main axis (A-A) and comprising a wall (26), the housing (24) defining an inner volume (28) and being equipped with a main inlet (20) and a main outlet (22),
- a desiccant unit (30) accommodated inside the inner volume (28) and being equipped with an inner inlet (32) and an inner outlet (34), and
- a cooling device (36) comprising:
- an inner portion (38) accommodated inside the inner volume (28) around the desiccant unit (30), defining an airpath (39) between the main inlet (20) and the inner inlet (32), and being configured to cool down air circulating in the airpath (39); and
- an outer portion (40) comprising a plurality of outer fins (42) fixed to the outer face (26B) of the wall (26) of the housing (24).

## Description

### TECHNICAL FIELD

The disclosure relates generally to an air pressure system for vehicle. In particular aspects, the disclosure relates to an air-drying device. The disclosure can be applied to automotive vehicles, such as cars, trucks, and buses, among other vehicle types. Although the disclosure may be described with respect to a particular vehicle, the disclosure is not restricted to any particular vehicle.

### BACKGROUND

It is common to install an air pressure system in a vehicle, for example to supply air to the suspension system or the brake system of the vehicle.

Such air pressure system generally comprises at least an air compressor and an air-drying device with a desiccant unit for drying the air downstream of the compressor.

The air leaving the compressor is generally at a high temperature, especially above 100°C. Yet, a desiccant unit generally operates optimally at temperatures below 65°C.

The air should thus be cooled before it reaches the desiccant unit.

An existing solution is to install a long metal pipe connecting these two elements.

However, this solution is not entirely satisfactory.

Indeed, such long pipe is heavy, expensive, and complex. Moreover, such long pipes generates generally quality and noise issues.

Furthermore, the cooling of air inside the pipe generates water condensation inside the tube, leading to the dirtying of the pipe and a risk of freezing in winter conditions.

One aim of this invention is to overcome these drawbacks, and in particular to propose a satisfactory solution to cool the air between the compressor and the desiccant unit.

### SUMMARY

According to a first aspect of the disclosure, an air-drying device for a vehicle comprises:
- a cylindrical housing extending along a main axis and comprising a wall with an inner face and an outer face, the housing defining an inner volume delimited by the inner face of the wall, the housing being equipped with a main inlet and a main outlet,
- a desiccant unit accommodated inside the inner volume, the desiccant unit being equipped with an inner inlet fluidically connected to the main inlet and an inner outlet fluidically connected to the main outlet, and
- a cooling device comprising an inner portion accommodated inside the inner volume around the desiccant unit and defining an airpath between the main inlet and the inner inlet, the inner portion being configured to cool down air circulating in the airpath;
the cooling device further comprising an outer portion comprising a plurality of outer fins fixed to the outer face of the wall of the housing.

The first aspect of the disclosure may seek to propose a satisfactory solution to cool the air upstream of the desiccant unit.

A technical benefit of the air-drying device may include that the air is cooled down upstream of the desiccant unit thanks to the cooling device. Furthermore, the outer fins of said cooling device enhance cooling inside the airpath by increasing the surface area for heat exchange between the ambient air and the inner volume.

Optionally in some examples, including in at least one preferred example, the inner portion comprises at least one inner fin accommodated inside the airpath.

A technical benefit may include that the inner fin(s) define(s) additional heat exchange contact surfaces and thus further enhances the cooling.

Optionally in some examples, including in at least one preferred example, at least one of the at least one inner fin extends radially relative to the main axis.

A technical benefit may include that the radial inner fin(s) defines an obstacle for the air flowing inside the airpath, thus defining additional heat exchange contact surfaces and therefore further enhancing the cooling.

Optionally in some examples, including in at least one preferred example, the inner portion comprises a plurality of radial inner fins forcing the circulation of the air between them.

Optionally in some examples, including in at least one preferred example, the inner portion comprises a plurality of radial inner fins forming at least one row.

Optionally in some examples, including in at least one preferred example, the inner portion comprises a plurality of radial inner fins, each fin being equipped with a plurality of through-holes.

A technical benefit of each of these features may include that these radial inner fins further define additional heat exchange contact surfaces and therefore enhances the cooling.

Optionally in some examples, including in at least one preferred example, at least one of the at least one inner fin extends axially relative to the main axis.

Optionally in some examples, including in at least one preferred example, the at least one of the at least one inner fin is a helical fin.

Optionally in some examples, including in at least one preferred example, the inner portion of the cooling device comprises a porous material element arranged inside the airpath.

A technical benefit of each of these features may include that these solutions further define additional heat exchange contact surfaces and therefore enhances the cooling.

Optionally in some examples, including in at least one preferred example, the outer fins are fixed according to a uniform circular distribution to the outer face of the wall of the housing.

A technical benefit may include that the heat exchange between the ambient air and the inner volume is uniform.

Optionally in some examples, including in at least one preferred example, the inner portion of the cooling device further comprises a reservoir, preferably at the bottom of the inner portion, configured to collect the water condensed inside the airpath.

A technical benefit may include that the water is collected, thus reducing the dirtying and the risk of freezing inside the inner portion.

Optionally in some examples, including in at least one preferred example, the air-drying device further comprises an inlet filter accommodated inside the inner volume between the main inlet and the inner portion and/or an outlet filter accommodated inside the inner volume between the inner outlet and the main outlet.

A technical benefit may include that the particles and/or oils are removed from the compressed air.

Optionally in some examples, including in at least one preferred example, the main inlet and the main outlet are merged in one unique connection.

A technical benefit may include a simplification of the conception of the device.

Optionally in some examples, including in at least one preferred example, the air-drying device further comprises an isolating unit arranged inside the inner volume between the desiccant unit and the inner portion of the cooling device.

A technical benefit may include that the desiccant unit is thermally isolated from the inner portion of the cooling device.

According to a second aspect of the disclosure, an air pressure system for a vehicle comprises an air compressor and an air-drying device as described above.

Optionally in some examples, including in at least one preferred example, the air compressor is fluidically connected to the main inlet of the air-drying device.

Optionally in some examples, including in at least one preferred example, the system further comprises a distributor device configured to control the distribution of air in the air compressor and/or the air-drying device.

A technical benefit may include that the distribution of air inside and outside the air-pressure system is controlled.

Optionally in some examples, including in at least one preferred example, the system further comprises an air tank fluidically connected to the main outlet of the air-drying device.

A technical benefit may include the supply of a reserve of clean compressed air, in particular to be used in the pneumatic systems of the vehicle.

According to a third aspect of the disclosure, a vehicle, in particular a utility vehicle, comprises an air-drying device as described above and/or an air pressure system as described above.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a schematic view of a vehicle comprising an air-pressure system with an air-drying device according to an example of the invention.
**FIG. 2** is a schematic view of an air-drying device according to a first example of the invention.
**FIG. 3** is a schematic cross-section view of the air-drying device of FIG. 2.
**FIG. 4** is a schematic longitudinal section view of the air-drying device of FIG. 2.
**FIG. 5** is a schematic cross-section view of an air-drying device according to a second example of the invention.
**FIG. 6** is a schematic longitudinal section view of an air-drying device according to a third example of the invention.
**FIG. 7** is a schematic longitudinal section view of an air-drying device according to a fourth example of the invention.
**FIG. 8** is a schematic longitudinal section view of an air-drying device according to a fifth example of the invention.
**FIG. 9** is a schematic longitudinal section view of an air-drying device according to a sixth example of the invention.

### DETAILED DESCRIPTION

The detailed description set forth below provides information and examples of the disclosed technology with sufficient detail to enable those skilled in the art to practice the disclosure.

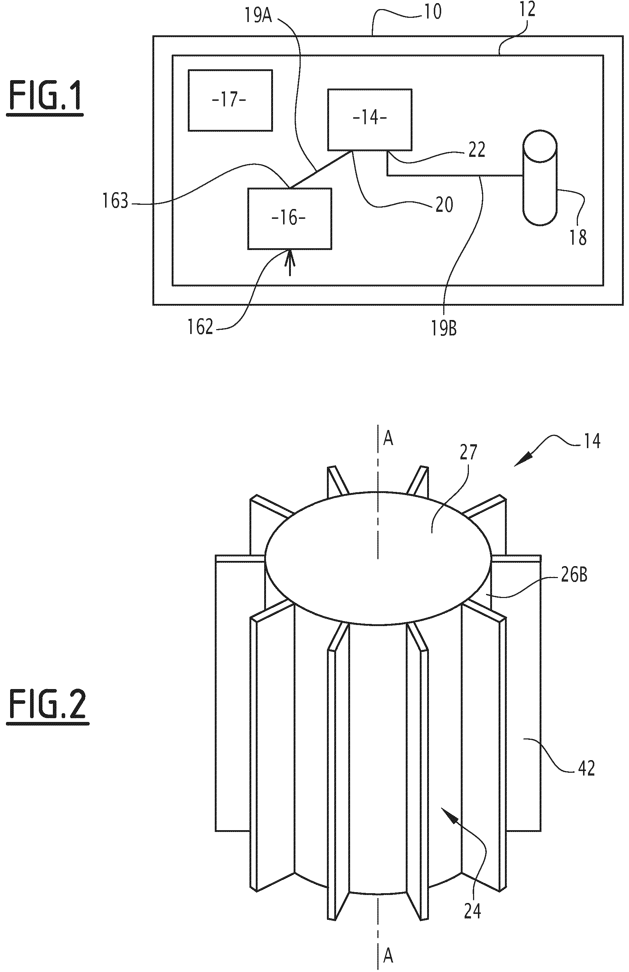

Figure 1 shows schematically an example of a vehicle 10.

The vehicle 10 is for example a motor vehicle, and in particular an automotive vehicle, such as a car, a bus or a truck.

The vehicle 10 comprises an air pressure system 12.

The air pressure system 12 is for example adapted to supply air to at least one pneumatic system of the vehicle 10, such as the suspension system or the brake system.

The air pressure system 12 comprises an air compressor 16 and an air-drying device 14.

In some examples, the air pressure system 12 further comprises a distributor device 17 and/or at least one air tank 18.

In some examples, the air pressure system 12 further comprises at least one pipe 19A, 19B, and preferably a plurality of pipes 19A, 19B. Each pipe 19A, 19B is for example a metallic tube.

The air compressor 16 comprises for example an inlet 162 and an outlet 163.

The air compressor 16 is preferably configured to increase the air pressure of the air between its inlet 162 and its outlet 163.

More specifically, the air compressor 16 is configured to draw the air through the inlet 162, then to increase its pressure through an adapted mechanical process, such as a piston, screw, or vane, and then to expel the compressed air through the outlet 164.

The compressed air expelled through the outlet 164 has, for example, a high temperature, in particular above 65°C, and more particularly above 100°C.

In some examples, the inlet 162 and the outlet 163 of the air compressor 16 are merged in one connection.

The air-drying device 14 is preferably configured to remove moisture from the compressed air, in particular expelled from the air compressor 16, thus ensuring that the air is dry and clean for future use in pneumatic systems of the vehicle 10.

Figures 2 to 4 show an example of an air-drying device 14, which will be described in more detail below.

The air-drying device 14 comprises a cylindrical housing 24, a desiccant unit 30 and a cooling device 36.

In some examples, the air-drying device 14 further comprises an isolating unit 54.

In some examples, the air-drying device 14 further comprises an inlet filter 50 and/or an outlet filter 52.

The cylindrical housing 24 extends along a main axis A-A.

The cylindrical housing 24 comprises a wall 26, and preferably two flanges 27.

In some examples, the wall 26 is a cylindrical wall extending along the main axis A-A.

For example, the wall 26 has an annular cross-section, notably with an inner diameter comprised between 10 cm and 50 cm.

The wall 26 comprises an inner face 26A and an outer face 26B.

The inner face 26A and the outer face 26B are more precisely facing each other according to a radial axis, perpendicular to the main axis A-A.

The thickness of the wall 26, i.e. the distance between the inner face 26A and the outer face 26B measured along the radial axis, is for example comprised between 5 mm and 2 cm.

The wall 26 is for example made in a metallic material and preferably made from a material with high thermal conductivity, such as aluminum for example.

The housing 24 defines an inner volume 28 delimited by the inner face 26A of the wall 26, and preferably closed by the two flanges 27.

In other words, the inner volume 28 corresponds to the entire volume delimited radially by the inner face 26A of the wall 26 and axially between the two flanges 27.

In some examples, the inner volume 28 is a cylindrical volume, for example comprised between 500 cm³ and 50.000 cm³.

The housing 24 is equipped with a main inlet 20 and a main outlet 22.

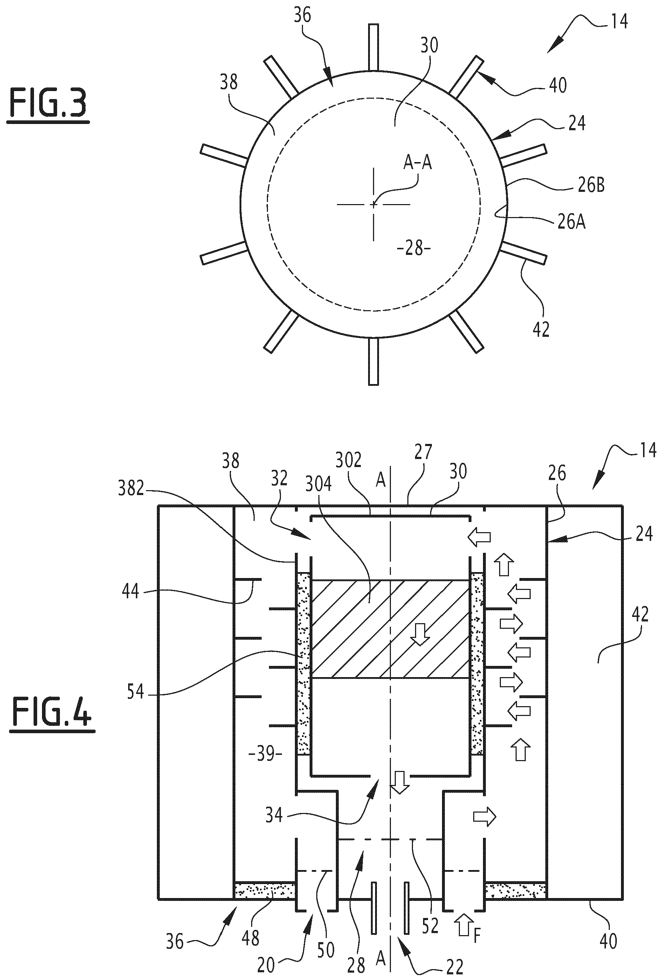

For examples, the main inlet 20 and/or the main outlet 22 is/are defined in one of the flanges 27, as visible on Figure 4.

In some examples, the main inlet 20 and the main outlet 22 are two distinct openings.

Alternatively, the main inlet 20 and the main outlet 22 are merged in one unique connection.

The main inlet 20 is fluidically connected to the air compressor 16, and in particular to the outlet 162 of the air compressor 16.

In some examples, the main inlet 20 is fluidically connected to the air compressor 16 via one of the pipes 19A, for example extending between the outlet 162 of the air compressor 16 and the main inlet 20 of the air-drying device 14, as shown on Figure 1.

In some examples, the main outlet 22 of the air-drying device 14 is fluidically connected to the air tank(s) 18, and in particular via one of the pipes 19B.

The desiccant unit 30 is accommodated inside the inner volume 28.

The desiccant unit 30 is equipped with an inner inlet 32 and an inner outlet 34.

As visible on Figure 4, the inner inlet 32 is fluidically connected to the main inlet 20 and the inner outlet 34 is fluidically connected to the main outlet 22.

In some examples, the inner inlet 32 is defined near one of the two flanges 27, while the main inlet 20 and the inner outlet 34 are defined near/in the other one of the two flanges 27.

In some examples, the desiccant unit 30 comprises a support 302 and a desiccant bed 304 housed inside the support 302.

In some examples, the support 302 has a cylindrical shape, in particular extending along the main axis A-A.

In some examples, the inner inlet 32 and/or the inner outlet 34 are defined in the support 302.

For example, the desiccant bed 304 contains a desiccant material, such as silica gel or activated alumina.

In particular, the desiccant bed 304 is configured to absorb moisture from the compressed air circulating from the inner inlet 32 to the inner outlet 34.

In some examples, the desiccant unit 30, and more precisely the desiccant bed 304, operates optimally for compressed air with a temperature below 65°C.

The cooling device 36 is preferably configured to cool down the compressed air upstream of the desiccant unit 30.

The cooling device 36 comprises an inner portion 38 and an outer portion 40.

As visible in Figure 3, the inner portion 38 is accommodated inside the inner volume 28 around the desiccant unit 30.

In particular, the inner portion 38 defines an airpath 39 between the main inlet 20 and the inner inlet 32.

In other words, the inner portion 38 connects fluidically the inner inlet 32 and the main inlet 20 via said airpath 39.

The inner portion 38 is configured to cool down the air circulating in the airpath 39, preferably such that the air entering the desiccant unit 30 by the inner inlet 32 has a temperature inferior to 65°C.

In some examples, the inner portion 38 comprises a partition wall 382, in particular accommodated inside the inner volume 28 around the desiccant unit 30.

The airpath 39 is for example delimited radially between the inner face 26A and said partition wall 382.

In some examples, the airpath 39 extends axially over the entire length of the inner volume 28, thus lengthening the distance travelled by the air inside the airpath 39 and therefore increasing the cooling.

In some examples, the inner portion 38 further comprises at least one inner fin 44 accommodated inside the airpath 39, and more preferably a plurality of inner fins 44 as visible on Figure 4.

In some examples, at least one of the inner fins 44 extends radially relative to the main axis A-A.

In particular, such radial fin 44 extending inside the airpath 39 defines an obstacle for the air flowing inside the airpath 39, thus defining additional heat exchange contact surfaces and therefore increasing the cooling.

In a particular example shown on Figure 4, the inner portion 38 comprises a plurality of radial inner fins 44 forcing the circulation of the air between them, in particular in order to lengthen the distance travelled by the air inside the airpath 39 and therefore enhancing the cooling.

For example, the radial inner fins 44 are arranged in staggered rows.

In some example, the inner fins 44 are all identical to each other.

Alternatively, the inner fins 44 differ from one another, for example in their shape, thickness or material.

In some examples, the inner portion 38 of the cooling device 36 further comprises a reservoir 48.

In particular, the reservoir 48 is configured to collect the water condensed inside the airpath 39, notably by the cooling of the air flowing inside it.

The reservoir 48 is preferably arranged at the bottom of the inner portion 38, as visible on Figure 4.

The outer portion 40 of the cooling device 36 is, in particular, arranged outside the inner volume 28.

The outer portion 40 comprises a plurality of outer fins 42 fixed to the outer face 26B of the wall 26 of the housing 24.

In some examples, the outer fins 42 are fixed according to a uniform circular distribution to the outer face 26B of the wall 26 of the housing 24.

Each of the outer fins 42 is advantageously configured to increase the surface area for heat exchange between the ambient air and the inner volume 28, in particular in order to cool down the airpath 39 of the inner portion 38 and thus increasing the cooling of the air flowing inside it.

In some examples, each of the outer fins 42 extends axially, i.e. parallel to the main axis A-A.

In some examples, the outer fins 42 are rectangular fins.

The outer fins 42 are preferably made from a material with high thermal conductivity, such as aluminum for example.

In some examples, the isolating unit 54 is arranged inside the inner volume 28 between the desiccant unit 30 and the inner portion 38 of the cooling device 36.

For example, the isolating unit 54 is arranged between the partition wall 382 of the inner portion 38 and the support 302 of the desiccant unit 30.

The isolating unit 54 is preferably configured to thermally isolate the desiccant unit 30 and the inner portion 38 of the cooling device 36.

In some examples, the isolating unit 54 is made of a thermally isolating material, such as foam or cork for example.

In some examples, the inlet filter 50 is accommodated inside the inner volume 28 between the main inlet 20 and the inner portion 38.

The inlet filter 50 is preferably configured to filter the air upstream of the inner portion 38, in particular in order to remove particles and/or oils present in the air passing through said inlet filter 50.

In some examples, the outlet filter 52 is accommodated inside the inner volume 28 between the inner outlet 34 and the main outlet 22.

The outlet filter 52 is preferably configured to filter the air downstream of the desiccant unit 30, in particular in order to remove particles and/or oils present in the air passing through said outlet filter 52.

In some examples, the distributor device 17 is configured to control the distribution of air in the different elements of the air pressure system 12, and in particular in and out from the air compressor 16 and/or the air-drying device 14.

For example, the distributor device 17 is also configured to control the distribution of compressed air between the air compressor 16 and the air-drying device 14.

By controlling the distribution, it is meant here for example controlling the quantity of air transferring between the elements.

In some examples, the distributor device 17 is also configured to control the distribution of compressed air to the air tank(s) 18, and in particular between the air-drying device 14 and the air tank(s) 18.

In some examples, each air tank 18 is fluidically connected to the main outlet 22 of the air-drying device 14, for example via one of the pipes 19B.

For example, each air tank 18 defines a supply of clean compressed air, in particular to be used in the pneumatic systems of the vehicle.

An example of use of the air pressure system 12 in the vehicle 10 will now be described.

First, a flow F of compressed air is transferred from the air compressor 16 to the air-drying device 14, in particular via one of the pipes 19A.

This flow F leaving the air compressor 16 has for example a high temperature, in particular above 65°C, and more particularly above 100°C.

As shown by the arrows on Figure 4, this flow F then enters the air-drying device 14 by the main inlet 20.

Preferably, this flow F passes then through the inlet filter 50, notably to remove particles and/or oils.

Then, the flow F enters the inner portion 38 of the cooling device 36.

More precisely, the flow F flows inside the airpath 39 up to the inner inlet 32.

In particular, as explained above, the compressed air of the flow F is cooled inside said airpath 39, preferably to a temperature inferior to 65°C.

This cooled compressed air then enters in the desiccant unit 30 through the inner inlet 32 and next passes through the desiccant bed 302, in order to remove the rest of moist.

Then, this flow F exits through the inner outlet 34 and then through the main outlet 22, and for example is next transferred to the air tank(s) 18, in particular via one of the pipes 19B.

Such air-pressure system 12, and in particular such air-drying device 14, is particularly advantageous.

In particular, thanks to the cooling device 36 of the air-drying device 14, the compressed air is cooled down before entering the desiccant unit 30, which ensures a proper operation of the same.

More precisely, the outer fins 44 enhance the cooling inside the airpath 39 by increasing the surface area for heat exchange between the ambient air and the inner volume 28.

Such cooling device 36 allows a satisfactory heat dissipation in the airpath 39, and more precisely above 1kW.

Moreover, this cooling device 36 integrated in the air-drying device 14 allows avoiding the use of long pipe and its associated drawbacks.

In particular, the air-pressure system 12 is lightweight, economical and easy to manufacture and reduces noise and risks of freezing.

The invention is not limited to the embodiments and variants described above.

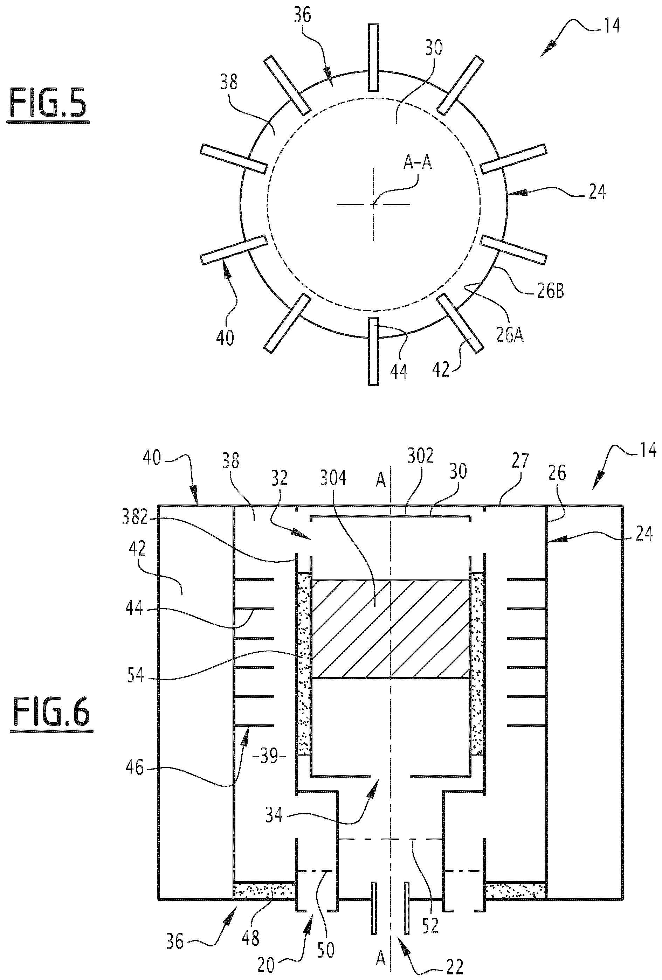

In particular, Figure 5 shows an air-drying device 14 according to a second example of the invention.

This second example differs from the first example only in that at least one inner fins 44 extends axially relative to the main axis A-A.

For example, each axial inner fin 44 extends in the continuity of one of the outer fins 42.

Figure 6 shows an air-drying device 14 according to a third example of the invention.

This third example differs from the first example only in that the inner fins 44 forms at least one row 46.

More precisely, the axial fins 44 arranged on the same row 46 are aligned to each other according to the main axis A-A.

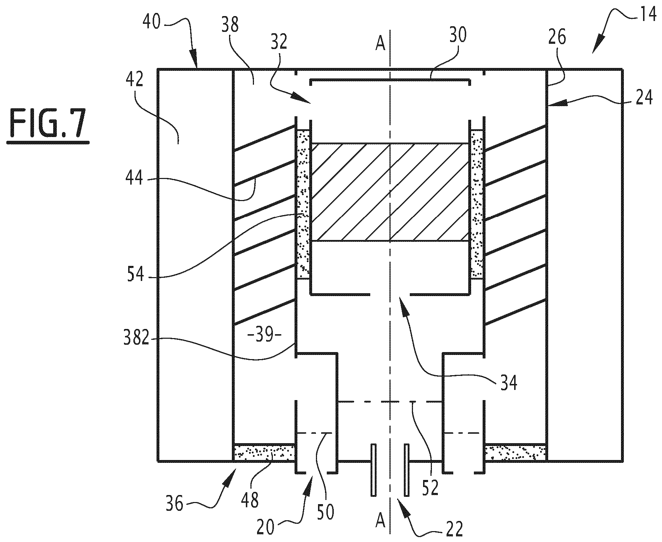

Figure 7 shows an air-drying device 14 according to a fourth example of the invention.

This fourth example differs from the first example only in that at least one inner fin 44 is a helical fin.

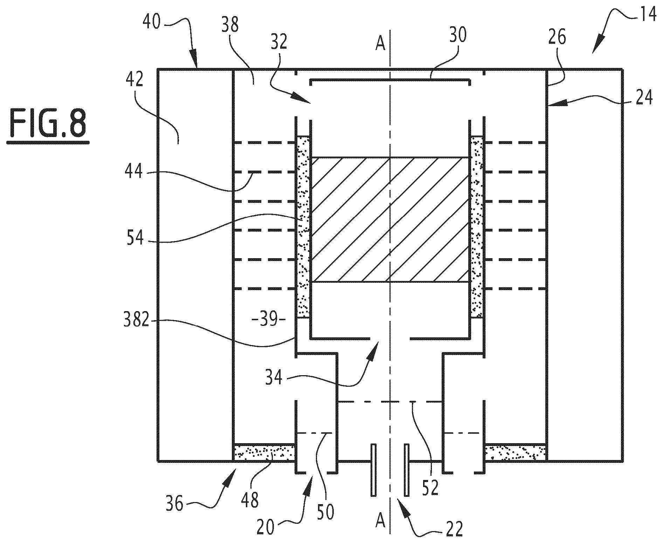

Figure 8 shows an air-drying device 14 according to a fifth example of the invention.

This fifth example differs from the first example only in that each inner fin 44 is equipped with a plurality of through-holes.

More precisely, the trough-holes are defined according to the main axis A-A.

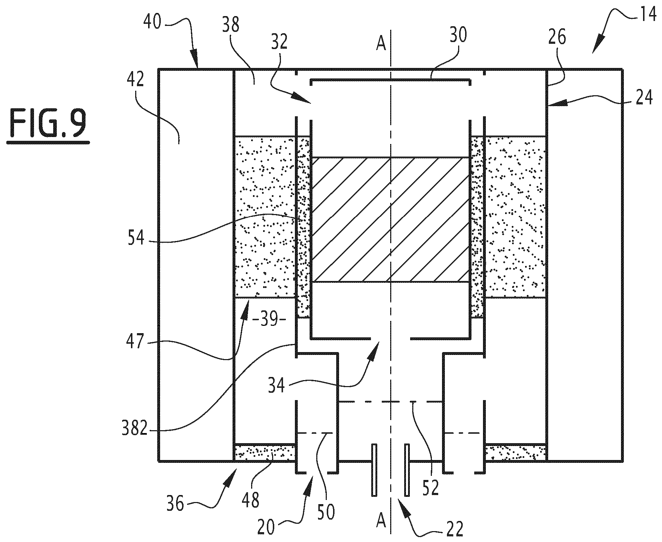

Figure 9 shows an air-drying device 14 according to a sixth example of the invention.

This sixth example differs from the first example only in that the inner portion comprises a porous material element 47 arranged inside the airpath 39.

In particular, in this sixth embodiment, the inner portion 38 does not comprise any inner fin 44.

The porous material element 47 is for example formed by a foam.

It will be understood that the above-described embodiments and variants can be combined with one another, provided that they are technically compatible.

For example, an air-drying device with radial inner fins 42 and axial inner fins 42 or an air drying device with radial inner fins 42 and porous material element 47 are covered in the scope of the disclosures.

Example 1: An air-drying device 14 for a vehicle 10 comprising:
- a cylindrical housing 24 extending along a main axis A-A and comprising a wall 26 with an inner face 26A and an outer face 26B, the housing 24 defining an inner volume 28 delimited by the inner face 26A of the wall 26, the housing 24 being equipped with a main inlet 20 and a main outlet 22,
- a desiccant unit 30 accommodated inside the inner volume 28, the desiccant unit 30 being equipped with an inner inlet 32 fluidically connected to the main inlet 20 and an inner outlet 34 fluidically connected to the main outlet 22, and
- a cooling device 36 comprising an inner portion 38 accommodated inside the inner volume 28 around the desiccant unit 30 and defining an airpath 39 between the main inlet 20 and the inner inlet 32, the inner portion 38 being configured to cool down air circulating in the airpath 39;
the cooling device 36 further comprising an outer portion 40 comprising a plurality of outer fins 42 fixed to the outer face 26B of the wall 26 of the housing 24.

Example 2: The air-drying device 14 according to example 1, wherein the inner portion 38 comprises at least one inner fin 44 accommodated inside the airpath 39.

Example 3: The air-drying device 14 according to example 2, wherein at least one of the at least one inner fin 44 extends radially relative to the main axis A-A.

Example 4: The air-drying device 14 according to example 3, wherein the inner portion 38 comprises a plurality of radial inner fins 44 forcing the circulation of the air between them.

Example 5: The air-drying device 14 according to example 3 or 4, wherein the inner portion 38 comprises a plurality of radial inner fins 44 forming at least one row 46.

Example 6: The air-drying device 14 according to any of examples 3 to 5, wherein the inner portion 38 comprises a plurality of radial inner fins 44, each fin 44 being equipped with a plurality of through-holes.

Example 7: The air-drying device 14 according to any of examples 2 to 6, wherein at least one of the at least one inner fin 44 extends axially relative to the main axis A-A.

Example 8: The air-drying device 14 according to any of examples 2 to 7, wherein the at least one of the at least one inner fin 44 is a helical fin.

Example 9: The air-drying device 14 according to any of examples 2 to 8, wherein the inner portion 38 of the cooling device 36 comprises a porous material element 47 arranged inside the airpath 39.

Example 10: The air-drying device 14 according to any of examples 1 to 9, wherein the outer fins 42 are fixed according to a uniform circular distribution to the outer face 26B of the wall 26 of the housing 24.

Example 11: The air-drying device 14 according to any of examples 1 to 10, wherein the inner portion 38 of the cooling device 36 further comprises a reservoir 48, preferably at the bottom of the inner portion 38, configured to collect the water condensed inside the airpath 39.

Example 12: The air-drying device 14 according to any of examples 1 to 11, further comprising an inlet filter 50 accommodated inside the inner volume 28 between the main inlet 20 and the inner portion 38.

Example 13: The air-drying device 14 according to any of examples 1 to 12, further comprising an outlet filter 52 accommodated inside the inner volume 28 between the inner outlet 34 and the main outlet 22.

Example 14: The air-drying device 14 according to any of examples 1 to 13, wherein the main inlet 20 and the main outlet 22 are merged in one unique connection.

Example 15: The air-drying device 14 according to any of examples 1 to 14, further comprising an isolating unit 54 arranged inside the inner volume 28 between the desiccant unit 30 and the inner portion 38 of the cooling device 36.

Example 16: An air pressure system 12 for a vehicle 10 comprising an air compressor 16, and an air-drying device 14 according to any of examples 1 to 15.

Example 17: The air pressure system 12 according to example 16, wherein the air compressor 16 is fluidically connected to the main inlet 20 of the air-drying device 14.

Example 18: The air pressure system 12 according to example 16 or 17, further comprising a distributor device 17 configured to control the distribution of air in the air compressor 16 and/or the air-drying device 14.

Example 19: The air pressure system 12 according to any of examples 16 to 18, further comprising an air tank 18 suitable to be fluidically connected to the main outlet 22 of the air-drying device 14.

Example 20: A vehicle 10 in particular a utility vehicle, comprising an air-drying device 14 according to any of examples 1 to 15 and/or an air pressure system 12 according to any of examples 16 to 19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An air-drying device (14) for a vehicle (10) comprising:
- a cylindrical housing (24) extending along a main axis (A-A) and comprising a wall (26) with an inner face (26A) and an outer face (26B), the housing (24) defining an inner volume (28) delimited by the inner face (26A) of the wall (26), the housing (24) being equipped with a main inlet (20) and a main outlet (22),
- a desiccant unit (30) accommodated inside the inner volume (28), the desiccant unit (30) being equipped with an inner inlet (32) fluidically connected to the main inlet (20) and an inner outlet (34) fluidically connected to the main outlet (22), and
- a cooling device (36) comprising an inner portion (38) accommodated inside the inner volume (28) around the desiccant unit (30) and defining an airpath (39) between the main inlet (20) and the inner inlet (32), the inner portion (38) being configured to cool down air circulating in the airpath (39);
the cooling device (36) further comprising an outer portion (40) comprising a plurality of outer fins (42) fixed to the outer face (26B) of the wall (26) of the housing (24).

2. The air-drying device (14) according to claim 1, wherein the inner portion (38) comprises at least one inner fin (44) accommodated inside the airpath (39).

3. The air-drying device (14) according to claim 2, wherein at least one of the at least one inner fin (44) extends radially relative to the main axis (A-A).

4. The air-drying device (14) according to claim 3, wherein the inner portion (38) comprises a plurality of radial inner fins (44) forcing the circulation of the air between them.

5. The air-drying device (14) according to claim 3 or 4, wherein the inner portion (38) comprises a plurality of radial inner fins (44) forming at least one row (46).

6. The air-drying device (14) according to any of claims 3 to 5, wherein the inner portion (38) comprises a plurality of radial inner fins (44), each fin (44) being equipped with a plurality of through-holes.

7. The air-drying device (14) according to any of claims 2 to 6, wherein at least one of the at least one inner fin (44) extends axially relative to the main axis (A-A).

8. The air-drying device (14) according to any of claims 2 to 7, wherein the at least one of the at least one inner fin (44) is a helical fin.

9. The air-drying device (14) according to any of claims 1 to 8, wherein the inner portion (38) of the cooling device (36) comprises a porous material element (47) arranged inside the airpath (39).

10. The air-drying device (14) according to any of claims 1 to 9, wherein the outer fins (42) are fixed according to a uniform circular distribution to the outer face (26B) of the wall (26) of the housing (24).

11. The air-drying device (14) according to any of claims 1 to 10, wherein the inner portion (38) of the cooling device (36) further comprises a reservoir (48), preferably at the bottom of the inner portion (38), configured to collect the water condensed inside the airpath (39).

12. The air-drying device (14) according to any of claims 1 to 11, wherein the main inlet (20) and the main outlet (22) are merged in one unique connection.

13. The air-drying device (14) according to any of claims 1 to 12, further comprising an isolating unit (54) arranged inside the inner volume (28) between the desiccant unit (30) and the inner portion (38) of the cooling device (36).

14. An air pressure system (12) for a vehicle (10) comprising:
- an air compressor (16), and
- an air-drying device (14) according to any of claims 1 to 13.

15. A vehicle (10), in particular a utility vehicle, comprising an air-drying device (14) according to any of claims 1 to 13 and/or an air pressure system (12) according to claim 14.

## Amended claims

### Amended claims in accordance with Rule 137(2) EPC.

1. An air-drying device (14) for a vehicle (10) comprising:
- a cylindrical housing (24) extending along a main axis (A-A) and comprising a wall (26) with an inner face (26A) and an outer face (26B), the housing (24) defining an inner volume (28) delimited by the inner face (26A) of the wall (26), the housing (24) being equipped with a main inlet (20) and a main outlet (22),
- a desiccant unit (30) accommodated inside the inner volume (28), the desiccant unit (30) being equipped with an inner inlet (32) fluidically connected to the main inlet (20) and an inner outlet (34) fluidically connected to the main outlet (22), and
- a cooling device (36) comprising an inner portion (38) accommodated inside the inner volume (28) around the desiccant unit (30) and defining an airpath (39) between the main inlet (20) and the inner inlet (32), the inner portion (38) being configured to cool down air circulating in the airpath (39);
the cooling device (36) further comprising an outer portion (40) comprising a plurality of outer fins (42) fixed to the outer face (26B) of the wall (26) of the housing (24),
**characterized in that** the inner portion (38) of the cooling device (36) comprises a porous material element (47) arranged inside the airpath (39).

2. The air-drying device (14) according to claim 1, wherein the inner portion (38) comprises at least one inner fin (44) accommodated inside the airpath (39).

3. The air-drying device (14) according to claim 2, wherein at least one of the at least one inner fin (44) extends radially relative to the main axis (A-A).

4. The air-drying device (14) according to claim 3, wherein the inner portion (38) comprises a plurality of radial inner fins (44) forcing the circulation of the air between them.

5. The air-drying device (14) according to claim 3 or 4, wherein the inner portion (38) comprises a plurality of radial inner fins (44) forming at least one row (46).

6. The air-drying device (14) according to any of claims 3 to 5, wherein the inner portion (38) comprises a plurality of radial inner fins (44), each fin (44) being equipped with a plurality of through-holes.

7. The air-drying device (14) according to any of claims 2 to 6, wherein at least one of the at least one inner fin (44) extends axially relative to the main axis (A-A).

8. The air-drying device (14) according to any of claims 2 to 7, wherein the at least one of the at least one inner fin (44) is a helical fin.

9. The air-drying device (14) according to any of claims 1 to 8, wherein the outer fins (42) are fixed according to a uniform circular distribution to the outer face (26B) of the wall (26) of the housing (24).

10. The air-drying device (14) according to any of claims 1 to 9, wherein the inner portion (38) of the cooling device (36) further comprises a reservoir (48), preferably at the bottom of the inner portion (38), configured to collect the water condensed inside the airpath (39).

11. The air-drying device (14) according to any of claims 1 to 10, wherein the main inlet (20) and the main outlet (22) are merged in one unique connection.

12. The air-drying device (14) according to any of claims 1 to 11, further comprising an isolating unit (54) arranged inside the inner volume (28) between the desiccant unit (30) and the inner portion (38) of the cooling device (36).

13. An air pressure system (12) for a vehicle (10) comprising:
- an air compressor (16), and
- an air-drying device (14) according to any of claims 1 to 12.

14. A vehicle (10), in particular a utility vehicle, comprising an air-drying device (14) according to any of claims 1 to 12 and/or an air pressure system (12) according to claim 13.
